# FASCICULE DE BREVET EUROPEEN

(11) **EP 4 396 608 B1**
(45) Date de publication et mention de la délivrance du brevet: **06.08.2025**
(21) Numéro de dépôt: 22773752.5
(22) Date de dépôt: 31.08.2022
(51) Int. Cl.: G01S 7/539, G01S 15/87, G01S 15/89, G01S 15/42, B63G 7/00, G01S 15/46, G01S 7/527, G01S 15/10

(54) **DISPOSITIF ET PROCÉDÉ DE DÉTECTION ET LOCALISATION D'OBJETS IMMERGÉS**
VORRICHTUNG UND VERFAHREN ZUR ERFASSUNG UND ORTUNG VON UNTERWASSEROBJEKTEN
DEVICE AND METHOD FOR DETECTING AND LOCATING UNDERWATER OBJECTS

(30) Priorité: 02.09.2021 FR 2109189
(43) Date de publication de la demande: 10.07.2024
(73) Titulaire: Exail Robotics, 83130 La Garde (FR)
(72) Inventeur: PINTO, Marc, 83130 LA GARDE (FR); DRAY, David, 83130 LA GARDE (FR); MELTZHEIM, Stéphane, 83130 LA GARDE (FR)
(74) Mandataire: Santarelli
(86) Numéro de dépôt international: PCT/FR2022/051633
(87) Numéro de publication internationale: WO 2023/031553

(56) Documents cités:
- WO-A2-96/03662
- FR-A1- 3 010 799
- US-A1- 2019 331 778
- US-A1- 2021 039 762

## Description

La présente invention concerne le domaine de la détection et localisation, à l'aide d'un ou plusieurs sonars, d'objets immergés ou flottants entre deux eaux tels que des mines à orin et mines dérivantes.

Une mine à orin est une mine à flottabilité positive, immergée ou flottant entre deux eaux. Elle est reliée par un câble, appelé orin, à un corps mort reposant sur un fond, appelé crapaud. Elle se déclenche automatiquement lorsqu'un navire de surface ou un sous-marin entre en contact avec elle ou passe à proximité. Souvent employées de manière intensive, elles représentent une grave menace pour les forces maritimes et le trafic commercial maritime. Il existe donc un réel besoin de les détecter, les localiser et les anéantir.

Hormis les sonars (acronyme de sound navigation and ranging en terminologie anglo-saxonne) des chasseurs de mines, la grande majorité des sonars existants pour détecter les mines à orin et dérivantes sont des sonars frontaux dit d'évitement (aussi appelés Mine and Obstacle Avoidance Sonar en terminologie anglo-saxonne ou MOAS), installés sous la coque de navires de surface qui sont des plateformes de grande valeur (aussi appelées High Value Unit en terminologie anglo-saxonne ou HVU). Le sonar a alors pour mission essentielle l'autoprotection de la HVU et, à ces fins, doit détecter des mines à faible immersion à une grande distance devant le navire, afin de laisser le temps à celui-ci d'exécuter une manœuvre d'évitement, y compris lorsque celui-ci est lancé à pleine vitesse, par exemple pendant un transit.

La géométrie de détection, très horizontale à cause de la faible immersion du sonar et des mines, est un défi, en particulier par mer formée. En effet, cette géométrie est très défavorable pour la propagation du son, l'orientation presque horizontale des rayons conduisant à des pertes considérables par absorption, dues notamment aux bulles par mer formée, pouvant conduire à une extinction du signal émis.

Ces contraintes conduisent à des sonars compliqués et chers, ce qui n'est pas souhaitable pour des sonars de drones de chasse aux mines. En effet, ces drones ont vocation à passer un temps substantiel dans des champs de mines pour détecter et neutraliser les mines et non seulement les éviter comme une HVU. Les besoins sont donc différents. Pour un drone, la fonction d'autoprotection, bien qu'indispensable, reste secondaire devant la mission principale de détection de mines sur le fond mais aussi dans toute la colonne d'eau (les sonars permettant d'effectuer de telles détections sont généralement appelés Volume Search Sonar en terminologie anglo-saxonne ou VSS).

A titre d'illustration, la demande de brevet US 2020/0333787 décrit la mise en œuvre d'un MOAS à balayage électronique sur un drone de surface. La solution est identique à celle proposée pour des HVUs, avec les inconvénients décrits ci-dessus.

Le brevet U.S. No 5,506,812 décrit un VSS à vision latérale, appelé TVSS (sigle de Toroidal Volume Search Sonar en terminologie anglo-saxonne). Il utilise une antenne cylindrique d'émission et de réception montée sur un poisson remorqué, qui insonifie en un seul ping (c'est-à-dire un seul cycle d'émission/réception) une zone toroïdale de 3 degrés en gisement (appelée along-track en terminologie anglo-saxonne) et de 360 degrés en site (appelée across-track en terminologie anglo-saxonne), balayant un grand volume cylindrique autour de la route du poisson lors de son avancée. Cette géométrie est efficace pour la détection du fait de l'exclusion des réverbérations des interfaces surface ou fond de la plupart des portes distance (ou range gates en terminologie anglo-saxonne) de la colonne d'eau où des mines sont cherchées. Même des cibles d'index très faibles peuvent alors être détectées. Cependant, le TVSS est compliqué et donc cher.

La demande internationale WO9603662A2 décrit un engin sous-marin comprenant un sonar inférieur pour la cartographie des fonds marins et un sonar supérieur pour la cartographie des glaces.

La demande de brevet français FR 3 010 799 décrit un système pour détecter et localiser des objets sous-marins immergés flottant entre deux eaux, comprenant un sonar à balayage mécanique permettant de détecter les objets sous-marins ayant renvoyé des échos sonars suite à l'émission d'une impulsion acoustique par le sonar.

La présente invention vise à remédier aux inconvénients de l'art antérieur en fournissant un système offrant une haute résolution en gisement et permettant la détection de mines proches de la surface.

### Exposé de l'invention

Pour répondre à au moins un des problèmes mentionnés ci-dessus, il est ainsi proposé un engin sous-marin pourvu d'au moins un premier sonar et d'un second sonar ,pour la détection d'objets sous-marins, le au moins un premier sonar étant un sonar dont la couverture angulaire en site est comprise entre 45 et 240 degrés, est orienté vers la surface lorsque l'engin sous-marin est en phase de détection d'un objet sous-marin et dont la couverture angulaire en gisement est inférieure à 10 degrés pour obtenir des mesures dans un plan, toutes les mesures d'un plan étant obtenues en un cycle d'émission/réception, le au moins un premier sonar permettant la détection d'objets sous-marins situés à une profondeur inférieure à celle de l'engin sous-marin, l'engin sous-marin étant caractérisé en ce que le second sonar est configuré pour détecter des objets sous-marins situés à une profondeur supérieure à celle de l'engin sous-marin, et en ce que l'engin sous-marin comprend en outre des moyens de corrélation pour corréler des données issues dudit au moins premier sonar et dudit second sonar, un objet sous-marin étant identifié et localisé selon un résultat de corrélation. Le au moins un sonar est par exemple un sonar à balayage dont le balayage est effectué par le déplacement de l'engin sous-marin.

Une telle solution est plus performante que les solutions connues de l'art antérieur telles que présentées ci-dessus et coûte moins cher à mettre en œuvre.

Selon des modes de réalisation particuliers, le au moins un sonar est pourvu d'une antenne d'émission longitudinale orientée selon l'axe de l'engin sous-marin, permettant une émission large bande.

Toujours selon des modes de réalisation particuliers, le au moins un sonar est pourvu d'une antenne de réception transversale linéaire ou courbe.

Toujours selon des modes de réalisation particuliers, la couverture est orientée vers l'avant dans un plan vertical longitudinal de l'engin sous-marin, selon un angle compris entre 5 et 25 degrés lorsque l'engin sous-marin est en phase de détection d'un objet sous-marin. Le au moins un sonar peut notamment être à balayage dans un plan vertical longitudinal de l'engin sous-marin, ledit balayage dans un plan vertical longitudinal de l'engin sous-marin étant contrôlé indépendamment de l'avance de l'engin sous-marin.

Toujours selon des modes de réalisation particuliers, le au moins un sonar est un sonar multifaisceaux.

Toujours selon des modes de réalisation particuliers, le au moins un sonar est un sonar latéral. Il peut notamment s'agir d'un sonar à antenne synthétique. Il peut être à émission colorée.

Toujours selon des modes de réalisation particuliers, le au moins un sonar est constitué d'une pluralité de sonars.

Toujours selon des modes de réalisation particuliers, le second sonar peut notamment être un sonar à antenne synthétique.

Toujours selon des modes de réalisation particuliers, l'engin est autonome.

L'invention a également pour objet un procédé de détection d'un objet sous-marin, par un engin sous-marin pourvu d'au moins un premier sonar et d'un second sonar, le procédé comprenant l'émission, par le au moins un premier sonar, d'un signal acoustique vers la surface selon une couverture angulaire en site comprise entre 45 et 240 degrés et une couverture angulaire en gisement inférieure à 10 degrés, l'acquisition de signaux acoustiques en retour du signal émis vers la surface, pour obtenir des mesures dans un plan, toutes les mesures d'un plan étant obtenues en un cycle d'émission/réception, le procédé étant caractérisé en ce qu'il comprend en outre l'émission, par le second sonar, d'un signal acoustique vers le fond, l'acquisition de signaux acoustiques en retour du signal émis vers le fond et le traitement des signaux acquis pour détecter et localiser un objet sous-marin situé à une profondeur inférieure à celle de l'engin sous-marin, ledit traitement comprenant une corrélation de données obtenues par traitement des signaux acquis en retour des signaux émis vers la surface et vers le fond. Un tel procédé permet une détection efficace d'objets sous-marins, notamment d'objets sous-marins situés à proximité de la surface.

Selon des modes de réalisation particuliers, le signal acoustique est émis vers l'avant dans un plan vertical longitudinal de l'engin sous-marin, selon un angle compris entre 5 et 25 degrés.

### Brève description des dessins

D'autres caractéristiques, détails et avantages de l'invention apparaîtront à la lecture de la description détaillée ci-après. Celle-ci est purement illustrative et doit être lue en regard des dessins annexés, sur lesquels :
**Fig. 1**

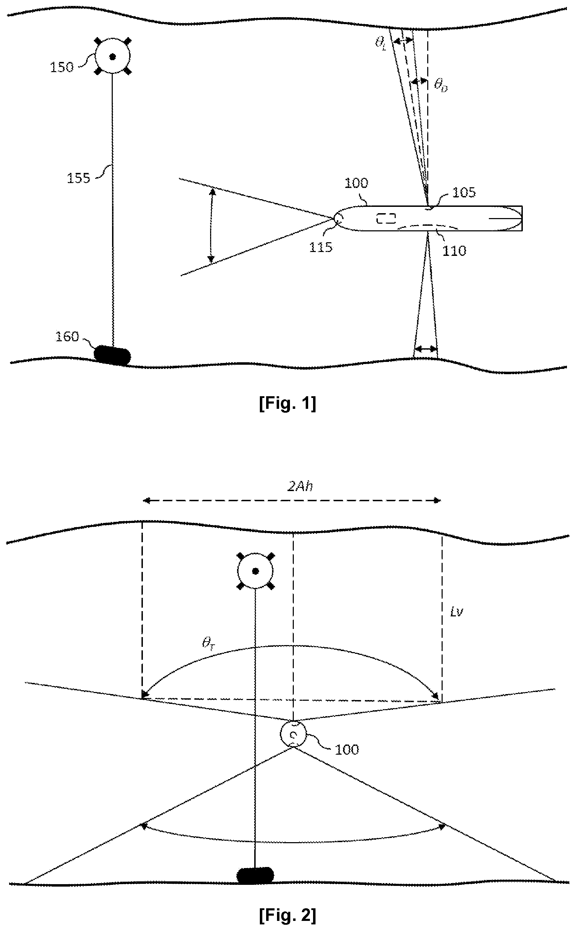

   [Fig. 1] illustre un exemple d'engin sous-marin, vu de côté, pourvu de plusieurs sonars, selon des modes de réalisation de l'invention ;
**Fig. 2**
   [Fig. 2] illustre l'engin sous-marin représenté sur la figure 1, vu de face ;
**Fig. 3**

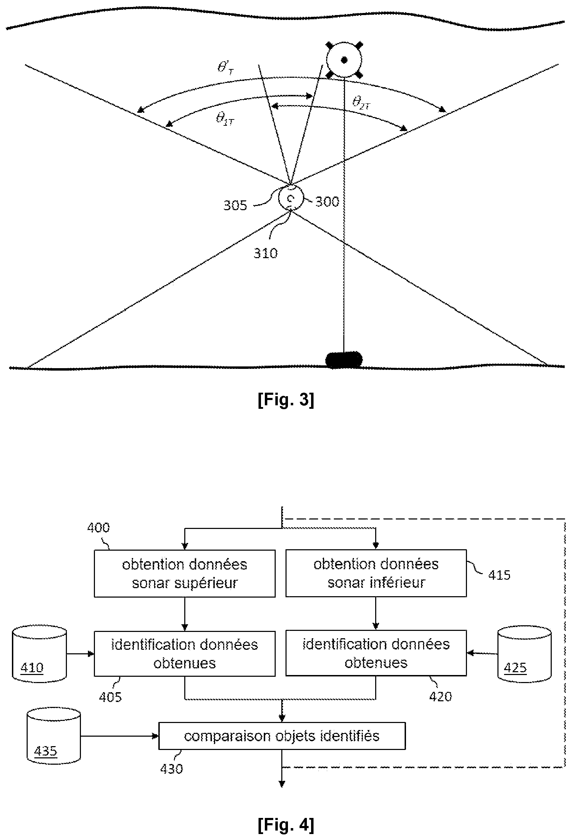

   [Fig. 3] illustre schématiquement un second exemple de configuration d'un engin sous-marin, vu de face, selon des modes de réalisation de l'invention ;
**Fig. 4**
   [Fig. 4] illustre un exemple d'étapes pour identifier une corrélation entre des données issues de sonars différents afin d'identifier un objet particulier ; et
**Fig. 5**

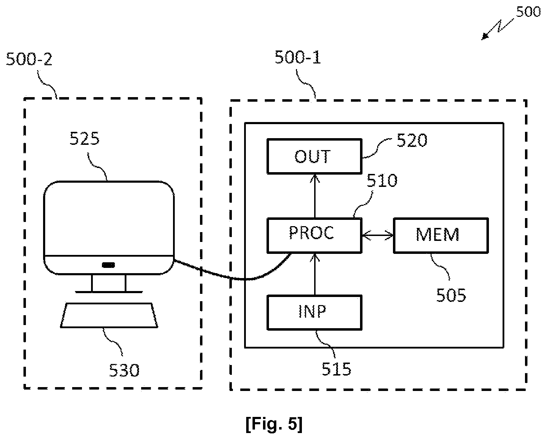

   [Fig. 5] représente un bloc-diagramme schématique d'un dispositif de traitement de l'information pour mettre en œuvre des étapes de traitement de données issues de sonars, par exemple les étapes illustrées sur la figure 4.

### Description détaillée

Les inventeurs ont déterminé qu'en choisissant un engin sous-marin tel qu'un poisson remorqué ou un drone à immersion variable, naviguant près du fond marin, il n'est pas utile de mettre en œuvre un sonar de détection dans une colonne d'eau (i.e. un sonar de type VSS) couvrant 360 degrés en site mais seulement une partie de l'hémisphère au-dessus de l'engin sous-marin, par exemple les 180 degrés de l'hémisphère au-dessus de l'engin sous-marin, l'hémisphère situé sous l'engin sous-marin étant mieux couvert par un sonar d'imagerie du fond, par exemple un sonar à antenne synthétique (ou SAS). En effet, ce dernier permet la détection des mines de fond et des mines à orin court (dont l'immersion est supérieure ou égale à celle de l'engin sous-marin), avec des performances bien supérieures aux solutions de type VSS connues. De plus, par association de la détection du flotteur par un sonar couvrant une partie de l'hémisphère au-dessus de l'engin sous-marin et du crapaud, voire éventuellement de l'orin, par le sonar d'imagerie du fond, une excellente classification et localisation des mines à orin long (dont l'immersion est inférieure à celle de l'engin sous-marin), peut être effectuée. En outre, un choix d'un sonar vendu dans le commerce pour la bathymétrie ou l'inspection de structure devient alors possible pour le VSS, réduisant considérablement les coûts de l'engin sous-marin de détection.

Selon des modes de réalisation particuliers, il est ainsi proposé d'utiliser un sonar, de préférence multifaisceaux, orienté vers la surface de la mer (c'est-à-dire vers n'importe quel point de la surface, de préférence vers le zénith de l'engin sous-marin ou à proximité) lorsque l'engin sous-marin est utilisé à des fins de détection et localisation d'un objet sous-marin (i.e. lorsqu'il est en phase de détection), qui émet un code à large bande, par exemple selon une bande passante comprise entre 60 et 80 KHz, avec une antenne longitudinale orientée selon l'axe de déplacement de l'engin sous-marin, formant ainsi au moins un faisceau fin en gisement et large en site (par exemple de l'ordre de 2 degrés en gisement et 180 degrés en site, pouvant être noté 2 x 180). Le signal reçu est de préférence reçu à l'aide d'une antenne orientée de manière transverse, de préférence une antenne courbe, formant une pluralité de faisceaux fins en site (par exemple de l'ordre de 2 degrés) permettant ainsi par intersection des faisceaux émission et réception la localisation en site-gisement-distance de tout objet dans un volume cylindrique dont la base est définie par l'arc de cercle du faisceau émission et l'axe par le rail selon lequel se déplace le véhicule.

L'emploi de faisceaux très fins en gisement, ainsi que la haute résolution distance, rend possible la détection et la localisation de mines dérivantes dans la réverbération de surface dans d'excellentes conditions (le problème de détection est formellement identique à celui de la détection d'une mine de fond dans la réverbération de fond). Selon ces modes de réalisation, toutes les mesures effectuées en un ping (c'est-à-dire en un cycle d'émission/réception) appartiennent à un volume (ou une fauchée) pouvant s'apparenter à un plan, par exemple une fauchée perpendiculaire ou sensiblement perpendiculaire au déplacement de l'engin sous-marin. Les mesures de différents plans sont effectuées à des instants différents, par balayage, par l'avancement de l'engin sous-marin, et toutes les mesures d'un même plan sont effectuées en un seul ping. Il est noté ici qu'un cycle d'émission/réception correspond à une ou plusieurs émissions effectuées en un instant donné et à la réception du ou des signaux émis à cet instant.

L'engin sous-marin peut être un véhicule autonome, par exemple un drone sous-marin, un véhicule téléopéré ou un véhicule tracté par un navire de surface, autonome ou non, tel qu'un poisson remorqué.

La **figure 1** illustre schématiquement un exemple d'engin sous-marin 100, par exemple un drone sous-marin, équipé de sonars, vu de côté. Comme illustré, l'engin sous-marin 100 comprend ici un premier sonar 105 tel qu'un sonar à balayage, à vision latérale, monté dans la partie supérieure de l'engin 100, ou sonar zénithal, permettant la détection et la localisation d'objets, notamment de mines à orin ou mines dérivantes, par exemple la mine 150, dans la partie d'une colonne d'eau située entre l'engin 100 et la surface de l'eau. Des exemples de caractéristiques d'un tel sonar sont décrits ci-dessous. Selon l'exemple illustré sur la figure 1, l'engin 100 comprend en outre un second sonar 110 tel qu'un sonar à balayage, à vision latérale, monté dans la partie inférieure de l'engin 100 et permettant la détection et la localisation d'objets, notamment d'orins et de crapauds de mines à orin, par exemple l'orin 155 et le crapaud 160, dans la partie d'une colonne d'eau située entre l'engin 100 et le fond de l'eau. Le sonar 110 est, par exemple, un sonar à antenne synthétique. Il peut en outre assurer la détection de mines de fond, et plus généralement de tout objet d'index comparable posé sur le fond, ainsi que la détection des mines à orin dont le flotteur se trouve à une immersion supérieure ou égale à celle de l'engin sous-marin 100. De même, toujours à titre d'exemple, l'engin 100 comprend ici un sonar frontal d'évitement 115.

La **figure 2** illustre schématiquement l'engin sous-marin 100 représenté sur la figure 1, vu de face.

Le sonar supérieur 105 comprend ici une antenne d'émission longitudinale permettant une émission large bande dans une fauchée transverse à la route. Le secteur d'émission est avantageusement dépointé, par exemple d'un angle *θ_{D}* de 5 à 20 degrés vers l'avant, pour éviter un retour nadir. Selon des modes de réalisations, le secteur émission est étroit en gisement, formant par exemple un angle *θ_{L}* entre 1 et 4 degrés, pour assurer, en combinaison avec la large bande, de bonnes performances de détection dans le volume de réverbération de surface, et large en site pour fournir une bonne couverture volumétrique. L'angle d'émission en site, noté *θ_{T},* est de préférence compris entre moins de 90 degrés et plus de 180 degrés, par exemple un angle compris entre 45 et 240 degrés. Cet angle définit l'intercept sonar, égal *à IₕxIᵥ* ou *2AₕxIᵥ* (où *Iₕ* ou *2Aₕ* est l'intercept horizontal et *Iᵥ* est l'intercept vertical), comme décrit en référence à la figure 2, et donc, en tenant compte de la vitesse de l'engin sous-marin, la couverture volumétrique du sonar. Le sonar supérieur 105 est par exemple un sonar multifaisceaux, aussi connu sous le nom de sonar de type MBES (multibeam echosounder en terminologie anglo-saxonne), généralement utilisé pour des applications de bathymétrie, ou un sonar latéral, aussi connu sous le nom de sonar de type SSS (side-scan sonar en terminologie anglo-saxonne), généralement utilisé pour des applications d'imagerie.

Le sonar supérieur 105 comprend en outre une antenne de réception transversale. Elle peut être linéaire ou, avantageusement, courbée pour couvrir un angle de réception supérieur à 180 degrés et maximiser l'intercept vertical (de telle sorte que l'intercept vertical *Iᵥ* soit supérieur ou égal à la hauteur d'eau *I* au-dessus de l'engin sous-marin), formant une pluralité de voies en site, permettant à la fois une meilleure détection et la localisation en site des échos.

Il est observé ici que la mise en œuvre d'un sonar latéral a pour conséquence qu'il existe une absence de couverture dans un cylindre autour de la route. Cette absence peut être couverte par l'utilisation d'un sonar frontal, par exemple le sonar frontal d'évitement 115.

Le sonar supérieur 105 est par exemple un sonar de la famille WBMS de la société Norbit (Norbit est une marque), par exemple un sonar WBMS STX. Ces sonars ont une ouverture en site pouvant aller jusqu'à 210 degrés en un seul ping, une ouverture en gisement de 1 degré à une fréquence de 400 kHz et de 2 degrés à 200 kHz, avec une portée supérieure à 150 mètres à une fréquence de 400 kHz et à 350 mètres à 200 kHz. Ils offrent une bande passante supérieure à 60 kHz avec un niveau sonore de 220 dB à une fréquence de 400 kHz et de 214 dB à 200 kHz. Le sonar WBMS STX est à émission programmable, permettant un dépointage du secteur d'émission et une stabilisation en tangage.

La **figure 3** illustre schématiquement un second exemple de configuration d'un engin sous-marin 300, vu de face, selon des modes de réalisation de l'invention. Comme l'engin sous-marin 100 illustré sur les figures 1 et 2, l'engin sous-marin 300 comprend ici un premier sonar 305, monté dans la partie supérieure de l'engin 300 et permettant la détection d'objet, notamment de mines à orin ou mines dérivantes, dans la partie d'une colonne d'eau située entre l'engin 300 et la surface de l'eau. De même, l'engin 300 comprend en outre un second sonar 310 monté dans la partie inférieure de l'engin 300 et permettant la détection d'objet, notamment de crapauds de mines à orin, dans la partie d'une colonne d'eau située entre l'engin 300 et le fond de l'eau. A nouveau, le sonar 310 est, par exemple, un sonar à antenne synthétique. De même, toujours à titre d'exemple, l'engin 300 comprend ici un sonar frontal d'évitement.

Le sonar supérieur 305 est par exemple un sonar de type SSS constitué de deux sonars. Comme illustré, l'angle d'émission en site, noté *θ'_{T},* résulte de la combinaison de l'angle d'émission de chacun des deux sonars, notés *θ_{1T}* et *θ_{2T}.* A nouveau, il est de préférence compris entre moins de 90 degrés et plus de 180 degrés, par exemple entre 45 et 240 degrés. Les deux sonars constituant le sonar supérieur 305 peuvent être, par exemple, des sonars latéraux, notamment des sonars à antenne synthétique.

La mise en œuvre d'un sonar supérieur et d'un sonar inférieur permet de détecter en une seule passe les mines de fond, les mines à orin et les mines dérivantes à l'exception d'un volume aveugle proche du nadir de l'engin sous-marin. Ce volume aveugle peut être comblé, de manière connue, par l'association de deux rails successifs, chaque rail couvrant le volume aveugle de l'autre rail.

Selon des modes de réalisation particuliers, le sonar supérieur est à balayage électronique dans un plan vertical longitudinal de l'engin sous-marin, permettant ainsi de dépointer le faisceau d'émission, par exemple pour compenser le tangage de l'engin sous-marin et assurer une couverture optimale du volume malgré les erreurs d'assiette. Dans une extension de cette variante, le sonar est à émission colorée (le signal émis comprend plusieurs fréquences distinctes) en gisement permettant également la compensation du lacet de la plateforme et l'augmentation du nombre d'opportunités de détection. Le sonar émet dans la même récurrence, plusieurs impulsions dans des sous-bandes disjointes couvrant un intervalle dans un plan vertical longitudinal de l'engin sous-marin. Selon un exemple particulier donné à titre d'illustration, une bande passante de 80kHz est découpée en 5 sous-bandes de 16kHz chacune, qui sont émises dans les secteurs 90 degrés + 2 degrés, 90 degrés + 1 degrés, 90 degrés, 90 degrés - 1 degrés, 90 degrés - 2 degrés dans un plan vertical longitudinal de l'engin sous-marin, ce qui permet de couvrir un secteur de 6 degrés sans perte de résolution, celle-ci étant fixée à 2 degrés. Les échos multiples d'une cible pourront ensuite faire l'objet d'une poursuite et d'une intégration incohérente, en utilisant la navigation de l'engin sous-marin voire la micro-navigation dans le cas où l'engin sous-marin est équipé d'un sonar à antenne synthétique. L'intégration incohérente permet de réduire les fluctuations naturelles des échos à la fois des cibles et du milieu (de la réverbération de surface notamment), et donc d'aplatir les queues de distribution de probabilité des amplitudes correspondantes et ainsi d'augmenter la probabilité de détection et réduire les fausses alarmes.

Selon des modes de réalisation particuliers, l'engin sous-marin comprend une unité de traitement qui reçoit des données issues des sonars supérieur et inférieur pour identifier une corrélation entre ces données par rapport à des modèles prédéterminés, par exemple pour établir une corrélation entre des données susceptibles de représenter une mine orin avec des données susceptibles de représenter un orin ou un crapaud, permettant une excellente classification de la mine à orin.

La **figure 4** illustre des étapes de tels modes de réalisation. Comme illustré, une première étape vise ici à obtenir des données issues du sonar supérieur (étape 400). Dans une étape suivante (étape 405), les données obtenues sont traitées, par exemple pour réduire le bruit, et comparées à des données représentatives d'objets cherchés, par exemple des données représentatives de mines à orin, mémorisées dans une base de données 410, pour déterminer si les données obtenues sont susceptibles de caractériser un objet cherché. Un niveau de confiance peut être associé à chaque objet potentiellement identifié. La position des objets potentiellement identifiés est, de préférence, déterminée.

De façon similaire, des données issues du sonar inférieur sont obtenues (étape 415). Dans une étape suivante (étape 420), les données obtenues du sonar inférieur sont traitées, par exemple pour réduire le bruit, et comparées à des données représentatives d'objets cherchés, par exemple des données représentatives d'un orin, d'un crapaud ou d'une mine de fond, mémorisées dans une base de données 425 pour déterminer si les données obtenues sont susceptibles de caractériser un objet cherché. La position des objets potentiellement identifiés est, de préférence, déterminée.

Dans une étape suivante (étape 430), une corrélation est effectuée entre les objets potentiellement identifiés à partir des données obtenues du sonar supérieur et les objets potentiellement identifiés à partir des données obtenues du sonar inférieur à partir de références mémorisées dans une base de données 435. Ainsi, par exemple, si des données obtenues du sonar supérieur sont potentiellement identifiées comme représentatives d'une mine à orin et si des données obtenues du sonar inférieur sont potentiellement identifiées comme représentatives d'un crapaud, le niveau de confiance associé à l'identification de chacun de ces objets peut être incrémenté. Réciproquement, si, par exemple, des données obtenues du sonar supérieur sont potentiellement identifiées comme représentatives d'une mine à orin et si des données obtenues du sonar inférieur sont potentiellement identifiées comme représentatives d'une mine de fond, il n'y a pas lieu de modifier le niveau de confiance associé à l'identification de chacun de ces objets. La position relative des objets potentiellement identifiés, par exemple la position relative d'une mine à orin et d'un crapaud, est également, de préférence, utilisée pour modifier le niveau de confiance associé à l'identification de chacun de ces objets.

Il est observé ici que les bases de données 410, 425 et 435 peuvent être des bases de données distinctes ou peuvent constituer une ou plusieurs bases de données.

La **figure 5** représente un bloc-diagramme schématique d'un dispositif de traitement de l'information 500 pour mettre en œuvre des étapes décrites précédemment, notamment des étapes décrites en référence à la figure 4. Selon l'exemple illustré, le dispositif de traitement de l'information 500 comprend deux parties, une première partie 500-1 pouvant être implémentée dans un engin sous-marin selon l'invention et une seconde partie 500-2 appartenant ici à un système distant, par exemple un navire de surface. Des données, par exemple des données issues de sonars, traitées ou non traitées, peuvent être échangées entre les parties 500-1 et 500-2 à l'aide d'une connexion filaire ou de moyens de communication sans fil.

Comme illustré, le dispositif 500 peut comprendre une mémoire 505 pour stocker des instructions permettant la mise en œuvre du procédé, les données issues du signal rétrodiffusé reçues, et des données temporaires pour réaliser les différentes étapes d'un procédé tel que décrit précédemment.

Le dispositif peut en outre comporter un circuit 510. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable, telle qu'une puce FPGA (pour « Field-Programmable Gate Array » en anglais), un SOC (pour « System On Chip » en anglais), un GPU (pour « Graphics Processing Unit » en anglais), ou un ASIC (pour « Application Specific Integrated Circuit » an anglais).

Les SOC ou système sur puce sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type FPGA (Field-Programmable Gate Array) sont des circuits électroniques reconfigurables par l'utilisateur.

Le dispositif 500 peut comporter une interface d'entrée 515, par exemple pour la réception de données issues d'un ou plusieurs sonars et une interface de sortie 520, par exemple pour transmettre ces données, traitées ou non traitées, et/ou des identifiants d'objets potentiellement identifiés.

Par ailleurs, le dispositif peut comporter, pour permettre une interaction aisée avec un utilisateur et pour afficher des résultats de détection, un écran 525 et un clavier 530. Bien entendu, le clavier est facultatif, notamment dans le cadre d'un ordinateur ayant la forme d'une tablette tactile, par exemple. Comme illustré, l'écran et/ou le clavier sont, de préférence, déportés.

En fonction du mode de réalisation, la partie 500-1 du dispositif 500 peut être un calculateur, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, une carte mémoire.

En fonction du mode de réalisation, la mémoire, l'unité de stockage de données ou le support de stockage amovible contient des instructions qui, lorsqu'elles sont exécutées par le circuit de commande 510, amènent ce circuit de commande 510 à effectuer ou contrôler les parties interface d'entrée 515, interface de sortie 520, stockage de données dans la mémoire 505 et/ou traitement de données selon un ou plusieurs modes de réalisation du procédé proposé.

Il est observé ici que si toutes les étapes peuvent être mises en œuvre dans un dispositif de l'engin sous-marin, certaines étapes peuvent être mises en œuvre dans l'engin sous-marin tandis que d'autres étapes sont mises en œuvre dans un dispositif distant. Ainsi, par exemple, la corrélation entre des objets potentiellement identifiés à partir des données obtenues du sonar supérieur et des objets potentiellement identifiés à partir des données obtenues du sonar inférieur peut être effectuée dans un dispositif d'un navire de surface recevant une identification des objets potentiellement détectés.

Bien entendu, la présente invention ne se limite pas aux formes de réalisation décrites ci-avant à titre d'exemples. Elle s'étend à d'autres variantes.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le dispositif et le procédé proposés comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Engin sous-marin (100, 300) pourvu d'au moins un premier sonar (105, 305) et d'un second sonar (110, 310), pour la détection d'objets sous-marins, le au moins un premier sonar (105, 305) étant un sonar dont la couverture angulaire en site est comprise entre 45 et 240 degrés, est orienté vers la surface lorsque l'engin sous-marin (100, 300) est en phase de détection d'un objet sous-marin et dont la couverture angulaire en gisement est inférieure à 10 degrés pour obtenir des mesures dans un plan, toutes les mesures d'un plan étant obtenues en un cycle d'émission/réception, le au moins un premier sonar (105, 305) permettant la détection d'objets sous-marins situés à une profondeur inférieure à celle de l'engin sous-marin (100, 300), l'engin sous-marin (100, 300) étant **caractérisé en ce que** le second sonar (110, 310) est configuré pour détecter des objets sous-marins situés à une profondeur supérieure à celle de l'engin sous-marin (100, 300), et **en ce que** l'engin sous-marin (100, 300) comprend en outre des moyens de corrélation pour corréler des données issues dudit au moins premier sonar (105, 305) et dudit second sonar (110, 310), un objet sous-marin étant identifié et localisé selon un résultat de corrélation.

2. Engin selon la revendication 1, selon lequel le au moins un premier sonar (105, 305) est pourvu d'une antenne d'émission longitudinale orientée selon l'axe de l'engin sous-marin (100, 300), permettant une émission large bande.

3. Engin selon la revendication 1 ou 2, selon lequel le au moins un premier sonar (105, 305) est pourvu d'une antenne de réception transversale linéaire ou courbe.

4. Engin selon l'une quelconque des revendications 1 à 3, selon lequel la couverture est orientée vers l'avant dans un plan vertical longitudinal de l'engin sous-marin (100, 300), selon un angle compris entre 5 et 25 degrés lorsque l'engin sous-marin (100, 300) est en phase de détection d'un objet sous-marin.

5. Engin selon la revendication 4, selon lequel le au moins un premier sonar (105, 305) est à balayage dans un plan vertical longitudinal de l'engin sous-marin (100, 300), ledit balayage dans un plan vertical longitudinal de l'engin sous-marin (100, 300) étant contrôlé indépendamment de l'avance de l'engin sous-marin (100, 300).

6. Engin selon l'une quelconque des revendications 1 à 5, selon lequel le au moins un premier sonar (105, 305) est un sonar multifaisceaux.

7. Engin selon l'une quelconque des revendications 1 à 5, selon lequel le au moins un premier sonar (105, 305) est un sonar latéral.

8. Engin selon la revendication 7, selon lequel le au moins un premier sonar (105, 305) est un sonar à antenne synthétique.

9. Engin selon la revendication 7 ou la revendication 8 selon lequel le au moins un premier sonar (105, 305) est à émission colorée.

10. Engin selon l'une quelconque des revendications 1 à 9, selon lequel le au moins un premier sonar (105, 305) est constitué d'une pluralité de sonars.

11. Engin selon l'une quelconque des revendications 1 à 10 selon lequel le second sonar (110, 310) est un sonar à antenne synthétique.

12. Engin selon l'une quelconque des revendications précédentes, selon lequel l'engin est autonome.

13. Procédé de détection d'un objet sous-marin, par un engin sous-marin (100, 300) pourvu d'au moins un premier sonar (105, 305) et d'un second sonar (110, 310), le procédé comprenant
- l'émission, par le au moins un premier sonar (105, 305), d'un signal acoustique vers la surface selon une couverture angulaire en site comprise entre 45 et 240 degrés et une couverture angulaire en gisement inférieure à 10 degrés,
- l'acquisition de signaux acoustiques en retour du signal émis vers la surface, pour obtenir des mesures dans un plan, toutes les mesures d'un plan étant obtenues en un cycle d'émission/réception,
le procédé étant **caractérisé en ce qu'**il comprend en outre
- l'émission, par le second sonar (110, 310), d'un signal acoustique vers le fond,
- l'acquisition de signaux acoustiques en retour du signal émis vers le fond et
- le traitement des signaux acquis pour détecter et localiser un objet sous-marin situé à une profondeur inférieure à celle de l'engin sous-marin (100, 300), ledit traitement comprenant une corrélation de données obtenues par traitement des signaux acquis en retour des signaux émis vers la surface et vers le fond.

14. Procédé selon la revendication 13, selon lequel le signal acoustique émis vers la surface est émis vers l'avant dans un plan vertical longitudinal de l'engin sous-marin (100, 300), selon un angle compris entre 5 et 25 degrés.

## Patentansprüche

1. Unterwasserfahrzeug (100, 300), das mit mindestens einem ersten Sonar (105, 305) und einem zweiten Sonar (110, 310) versehen ist, zur Erkennung von Unterwasserobjekten, wobei das mindestens eine erste Sonar (105, 305) ein Sonar ist, dessen Zielhöhenwinkelabdeckung im Bereich zwischen 45 und 240 Grad liegt, zur Oberfläche gerichtet ist, wenn sich das Unterwasserfahrzeug (100, 300) in der Phase des Erkennens eines Unterwasserobjekts befindet, und dessen Seitenwinkelabdeckung weniger als 10 Grad beträgt, um Messungen in einer Ebene zu erhalten, wobei alle Messungen einer Ebene in einem Sende-/Empfangszyklus erhalten werden, wobei das mindestens eine erste Sonar (105, 305) die Erkennung von Unterwasserobjekten ermöglicht, die sich in einer geringeren Tiefe befinden als die des Unterwasserfahrzeugs (100, 300), wobei das Unterwasserfahrzeug (100, 300) **dadurch gekennzeichnet ist, dass** das zweite Sonar (110, 310) so konfiguriert ist, dass es Unterwasserobjekte erkennt, die sich in einer größeren Tiefe befinden als die des Unterwasserfahrzeugs (100, 300), und dass das Unterwasserfahrzeug (100, 300) weiter Korrelationsmittel zum Korrelieren von Daten, die von dem mindestens ersten Sonar (105, 305) und dem zweiten Sonar (110, 310) stammen, umfasst, wobei ein Unterwasserobjekt gemäß einem Korrelationsergebnis identifiziert und lokalisiert wird.

2. Fahrzeug nach Anspruch 1, wobei das mindestens eine erste Sonar (105, 305) mit einer entlang der Achse des Unterwasserfahrzeugs (100, 300) ausgerichteten Längssendeantenne versehen ist, die eine Breitbandemission ermöglicht.

3. Fahrzeug nach Anspruch 1 oder 2, wobei das mindestens eine erste Sonar (105, 305) mit einer linearen oder gebogenen Querempfangsantenne versehen ist.

4. Fahrzeug nach einem der Ansprüche 1 bis 3, wobei die Abdeckung in einer vertikalen Längsebene des Unterwasserfahrzeugs (100, 300) nach vorne gerichtet ist, in einem Winkel im Bereich zwischen 5 und 25 Grad, wenn sich das Unterwasserfahrzeug (100, 300) in der Phase des Erkennens eines Unterwasserobjekts befindet.

5. Fahrzeug nach Anspruch 4, wobei das mindestens eine erste Sonar (105, 305) in einer vertikalen Längsebene des Unterwasserfahrzeugs (100, 300) scannt, wobei das Scannen in einer vertikalen Längsebene des Unterwasserfahrzeugs (100, 300) unabhängig vom Vorschub des Unterwasserfahrzeugs (100, 300) gesteuert wird.

6. Fahrzeug nach einem der Ansprüche 1 bis 5, wobei das mindestens eine erste Sonar (105, 305) ein Mehrstrahlsonar ist.

7. Fahrzeug nach einem der Ansprüche 1 bis 5, wobei das mindestens eine erste Sonar (105, 305) ein Seitensonar ist.

8. Fahrzeug nach Anspruch 7, wobei das mindestens eine erste Sonar (105, 305) ein Sonar mit synthetischer Antenne ist.

9. Fahrzeug nach Anspruch 7 oder Anspruch 8, wobei das mindestens eine erste Sonar (105, 305) mit Farbemission ist.

10. Fahrzeug nach einem der Ansprüche 1 bis 9, wobei das mindestens eine erste Sonar (105, 305) aus einer Vielzahl von Sonaren besteht.

11. Fahrzeug nach einem der Ansprüche 1 bis 10, wobei das zweite Sonar (110, 310) ein Sonar mit synthetischer Antenne ist.

12. Fahrzeug nach einem der vorstehenden Ansprüche, wobei das Fahrzeug autonom ist.

13. Verfahren zum Erkennen eines Unterwasserobjekts durch ein Unterwasserfahrzeug (100, 300), das mit mindestens einem ersten Sonar (105, 305) und einem zweiten Sonar (110, 310) versehen ist, wobei das Verfahren umfasst
- Senden eines akustischen Signals durch das mindestens eine erste Sonar (105, 305) zur Oberfläche gemäß einer Zielhöhenwinkelabdeckung im Bereich zwischen 45 und 240 Grad und einer Seitenwinkelabdeckung von weniger als 10 Grad,
- Erfassen von akustischen Signalen als Rückkopplung des zur Oberfläche gesendeten Signals, um Messungen in einer Ebene zu erhalten, wobei alle Messungen einer Ebene in einem Sende-/Empfangszyklus erhalten werden,
wobei das Verfahren **dadurch gekennzeichnet ist, dass** es weiter umfasst
- Senden eines akustischen Signals durch das zweite Sonar (110, 310) zum Boden,
- Erfassen von akustischen Signalen als Rückkopplung des zum Boden gesendeten Signals, und
- Verarbeiten der erfassten Signale, um ein Unterwasserobjekt, das sich in einer geringeren Tiefe als der des Unterwasserfahrzeugs (100, 300) befindet, zu erkennen und zu lokalisieren, wobei das Verarbeiten ein Korrelieren von Daten umfasst, die durch Verarbeiten der erfassten Signale als Rückkopplung der zur Oberfläche und zum Boden gesendeten Signale erhalten werden.

14. Verfahren nach Anspruch 13, wobei das zur Oberfläche gesendete akustische Signal in einer vertikalen Längsebene des Unterwasserfahrzeugs (100, 300) in einem Winkel im Bereich zwischen 5 und 25 Grad nach vorne gesendet wird.

## Claims

1. An underwater vehicle (100, 300) provided with at least a first sonar (105, 305) and a second sonar (110, 310), for the detection of underwater objects, the at least one first sonar (105, 305) being a sonar whose angular coverage in elevation is comprised between 45 and 240 degrees, is oriented towards the surface when the underwater vehicle (100, 300) is in the detection phase of an underwater object and whose angular coverage in bearing is less than 10 degrees to obtain measurements in a plane, all the measurements of a plane being obtained in one emission/reception cycle, the at least one first sonar (105, 305) allowing the detection of underwater objects located at a depth less than that of the underwater vehicle (100, 300), the underwater vehicle (100, 300) being **characterized in that** the second sonar (110, 310) is configured to detect underwater objects located at a depth greater than that of the underwater vehicle (100, 300), the underwater vehicle (100, 300) further comprises correlation means for correlating data from said at least first sonar (105, 305) and said second sonar (110, 310), an underwater object being identified and located according to a correlation result.

2. The vehicle according to claim 1, according to which the at least one first sonar (105, 305) is provided with a longitudinal emission antenna oriented along the axis of the underwater vehicle (100, 300), allowing broadband emission.

3. The vehicle according to claim 1 or 2, according to which the at least one first sonar (105, 305) is provided with a linear or curved transverse reception antenna.

4. The vehicle according to any one of claims 1 to 3, according to which the cover is oriented forward in a longitudinal vertical plane of the underwater vehicle (100, 300), at an angle comprised between 5 and 25 degrees when the underwater vehicle (100, 300) is in the detection phase of an underwater object.

5. The vehicle according to claim 4, according to which the at least one first sonar (105, 305) is with a scanning in a longitudinal vertical plane of the underwater vehicle (100, 300), said scanning in a longitudinal vertical plane of the underwater vehicle (100, 300) being controlled independently of the advance of the underwater vehicle (100, 300).

6. The vehicle according to any one of claims 1 to 5, according to which the at least one first sonar (105, 305) is a multibeam sonar.

7. The vehicle according to any one of claims 1 to 5, according to which the at least one first sonar (105, 305) is a side sonar.

8. The vehicle according to claim 7, according to which the at least one first sonar (105, 305) is a synthetic antenna sonar.

9. The vehicle according to claim 7 or claim 8 according to which the at least one first sonar (105, 305) has coloured emission.

10. The vehicle according to any one of claims 1 to 9, according to which the at least one first sonar (105, 305) is made up of a plurality of sonars.

11. The vehicle according to any one of claims 1 to 10 according to which the second sonar (110, 310) is a synthetic antenna sonar.

12. The vehicle according to any one of the preceding claims, according to which the vehicle is autonomous.

13. A method for detecting an underwater object, by an underwater vehicle (100, 300) provided with at least a first sonar (105, 305) and a second sonar (110, 310), the method comprising
- the emission, by the at least one first sonar, of an acoustic signal towards the surface according to an angular coverage in elevation comprised between 45 and 240 degrees and an angular coverage in bearing less than 10 degrees,
- the acquisition of acoustic signals in return of the signal emitted towards the surface, to obtain measurements in a plane, all the measurements of a plane being obtained in one emission/reception cycle,
the method being **characterized in that** it further comprises
- the emission, by the second sonar (110, 310), of an acoustic signal towards the seabed,
- the acquisition of acoustic signals in return of the signal emitted towards the seabed and
- the processing of the acquired signals to detect and locate an underwater object located at a depth less than that of the underwater vehicle (100, 300), said processing comprising a correlation of data obtained by processing the acquired signals in return for the signals emitted towards the surface and towards the seabed.

14. The method according to claim 13, according to which the acoustic signal emitted towards the surface is emitted forward in a longitudinal vertical plane of the underwater vehicle (100, 300), at an angle comprised between 5 and 25 degrees.
